Europäisches Patentamt

European Patent Office

Office européen des brevets

(11) Veröffentlichungsnummer: **0 514 915 A2**

## (12) EUROPÄISCHE PATENTANMELDUNG

(21) Anmeldenummer: **92108639.3**

(22) Anmeldetag: **21.05.92**

(51) Int. Cl.5: **B29C 53/18**, B29C 71/02,
//(G11B23/00,B29L9:00)

(30) Priorität: **24.05.91 DE 4117012**

(43) Veröffentlichungstag der Anmeldung:
**25.11.92 Patentblatt 92/48**

(84) Benannte Vertragsstaaten:
**AT BE CH DE ES FR GB IT LI LU NL SE**

(71) Anmelder: **GAO Gesellschaft für Automation
und Organisation mbH
Euckenstrasse 12
W-8000 München 70(DE)**

(72) Erfinder: **Hoppe, Joachim
Breisacherstrasse 1
W-8000 München 80(DE)**
Erfinder: **Neumann, Eugen
Dickenstrasse 3a
W-8000 München 60(DE)**

(74) Vertreter: **Klunker . Schmitt-Nilson . Hirsch
Winzererstrasse 106
W-8000 München 40(DE)**

(54) Verfahren und Vorrichtung zur Nachbehandlung eines mehrschichtigen gewölbten Laminats.

(57) Die Erfindung betrifft Verfahren und Vorrichtungen zur Nachbehandlung eines mehrschichtigen, unter der Einwirkung von Wärme und Druck hergestellten Laminats aus Kunststoff, gegebenenfalls mit Zusatzschichten aus anderen Materialien wie beispielsweise Papier. Die Nachbehandlung erfolgt durch thermoplastische Verformung des Laminats, indem die konkave Seite des Laminats gestreckt und/oder das Laminat zwischen gewölbten Platten geformt wird.

FIG.1

EP 0 514 915 A2

Die Erfindung betrifft Verfahren und Vorrichtungen zur Nachbehandlung eines mehrschichtigen, unter der Einwirkung von Wärme und Druck hergestellten Laminats aus Kunststoff, ggf. mit Zusatzschichten aus anderen Materialien wie beispielsweise Papier.

Diese Laminate haben in verschiedenen Fällen nach der Herstellung eine nicht zufriedenstellende Planlage. Dies zeigt sich besonders deutlich an Laminaten mit unsymmetrischem Schichtaufbau sowie bei Verwendung von verschiedenen Materialien im Schichtaufbau, wie zum Beispiel bei Laminaten aus PVC und Papier. Ursache für die entstehende Wölbung des Laminats ist vermutlich das unterschiedliche Temperaturverhalten der verwendeten Materialien. Die Ausprägung der Wölbung gegenüber der Planlage zeigt sich abhängig von der Anordnung der Schichten im Laminat und der Art der verwendeten Schichten.

Besondere Probleme bereitet die Wölbung bei Scheckkarten, Kreditkarten und dergleichen, die einen Unterschriftsstreifen aus Papier und/oder einen Magnetstreifen aufweisen. Der Magnetstreifen kann bei zu großer Wölbung nicht mehr einwandfrei von der Leseeinrichtung eines Automaten gelesen bzw. beschrieben werden und die Karten werden dann als unecht zurückgewiesen. Um diesen Umstand vorzubeugen, dürfen diese Karten eine vorgeschriebene maximale Wölbhöhe nicht überschreiten.

Bislang wurden die gewölbten Laminate mittels einer Walzenbahn mit vorgegebener Krümmung mechanisch nachbehandelt. Hierbei war eine starke Überdehnung notwendig, die nach Abschluß der Relaxation eine geringe Entwölbung bewirkte. Durch diese starke überdehnung ist aber eine überbeanspruchung des Schichtaufbaus nicht auszuschließen. Ferner ist die Langzeitbeständigkeit der Entwölbung nicht immer sichergestellt, da erfahrungsgemäß bisher eine dauerhafte mechanische Entwölbung nur bei Laminaten möglich war, bei denen nur eine geringfügige Wölbung vorlag und bei denen im Schichtaufbau Papierschichten vorlagen, die durch die mechanische überdehnung den Erfordernissen entsprechend reversibel gestreckt wurden bzw. das Papiergefüge durch partiellen Papierfaserriß entsprechend gelockert wurde.

Daher liegt der Erfindung die Aufgabe zugrunde, ein Verfahren und eine Vorrichtung vorzuschlagen, die die Nachbehandlung mehrschichtiger Laminate ohne eine überbeanspruchung des Schichtaufbaus gestattet.

Diese Aufgabe wird durch die in den nebengeordneten Ansprüchen angegebenen Merkmale jeweils gelöst. Vorteilhafte Ausgestaltungen der erfindungsgemäßen Lösung sind in den Unteransprüchen angegeben.

Der Kern der Erfindung liegt in einer speziellen thermischen Nachbehandlung des gewölbten Laminats, bei der die Wölbung des Laminats bereits durch geringfügiges überdehnen für einen definierten Zeitraum und gleichzeitiger Wärme und Druckeinwirkung in die gewünschte Form gebracht wird. Da bei ungünstigem Schichtaufbau immer eine gewisse Restspannung erhalten bleibt, die eine Wölbung bewirkt, sind beim Nachbehandeln überdehnung, Wärme, Druck und Einwirkzeit derart aufeinander abzustimmen, daß diese Restspannung durch eine mittels der Nachbehandlung erzeugte und entgegengesetzt wirkende Spannung kompensiert wird. Bei dem Laminat kann es sich sowohl um ein Bogenlaminat als auch um einzelne Kartenlaminate handeln.

Gemäß einer ersten Ausführungsform der Erfindung erfolgt die Nachbehandlung des gewölbten Laminats zwischen planparallelen Platten, von denen eine Platte gekühlt und die gegenüberliegende Platte beheizt ist. Das Laminat wird zwischen den Platten gepreßt, wobei es seine ursprüngliche Wölbung verliert. Die ehemals konkave, das heißt zu kurze Seite des Laminats, liegt dann vollflächig an der beheizten Platte und die konvexe Seite liegt an der gekühlten Platte an. Die Temperaturen und die Einwirkzeit sind derart abgestimmt, daß ausschließlich die an der beheizten Platte unmittelbar angrenzenden Laminatschichten plastisch verformbar sind, wobei darauf zu achten ist, daß ein vollständiges Durchheizen des Laminats - wie beim Laminierprozeß - durch eine ausreichende Kühlung der gegenüberliegenden Platte unterbleibt. Der von den Platten auf das Laminat ausgeübte Druck streckt die nunmehr plastisch verformbaren Laminat-Schichten der ehemals konvexen Seite gegenüber den starren, an die Kühlplatte angrenzenden Laminat-Schichten. Nach Abkühlung zeigt das Laminat in Abhängigkeit von den vorgenannten Parametern zumindest eine geringe, vorzugsweise aber eine plane oder falls gewünscht in entgegengesetzter Richtung gewölbte Form, die es dauerhaft beibehält.

Gemäß einer zweiten Ausführungsform der Erfindung erfolgt die Nachbehandlung des gewölbten Laminats zwischen gewölbten parallelen Platten, von denen entweder erneut eine beheizt und die andere gekühlt oder alternativ beide beheizt sind. Das Laminat wird zwischen den Platten gepreßt, wobei es ebenfalls seine ursprüngliche Wölbung verliert. In beiden Fällen sind die Temperaturen und die Einwirkzeit ebenfalls derart abzustimmen, daß die im Laminat vorliegenden Biegespannungen in ausreichendem Maß kompensiert werden. Die aus dem Nachbehandlungsvorgang resultierende Biegespannung im Laminat verändert sich auch beim Durchheizen, so daß auch ein derart nachbehandeltes Laminat die gewünschte Formkorrektur aufweist und dauerhaft beibehält.

Gemäß einer weiteren Ausführungsform sind die planparallelen oder gewölbten Platten der vorgenannten Ausführungsformen als Transportband ausgebildet, daß den An- und Abtransport der Laminate zur Nachbehandlungsvorrichtung übernimmt.

Gegenüber dem Stand der Technik erlaubt die erfindungsgemäße Lösung eine gezieltere Entwölbung, die zudem schonender von statten geht, da die starke Überdehnung unterbleibt. Ferner bewirkt die thermische Nachbehandlung eine stabile Langzeitbeständigkeit der Entwölbung.

Die Erfindung wird nachfolgend anhand von Ausführungsbeispielen näher erläutert. Es zeigen:

Fig. 1 Eine Abbildung zur Erläuterung des prinzipiellen Ablaufs der Nachbehandlung eines Kunststoff-Laminat-Bogens in einer Nachbehandlungsvorrichtung mit planparallelen Platten;

Fig. 2 eine Nachbehandlungsvorrichtung mit planparallelen Platten und einer Transporteinrichtung, wobei die Vorrichtung zwei Bogen gleichzeitig nachbehandelt;

Fig. 3 eine Nachbehandlungsvorrichtung gemäß Fig. 1 mit gewölbten Platten;

Fig. 4 eine Nachbehandlungsvorrichtung gemäß Fig. 2 mit gewölbten Platten.

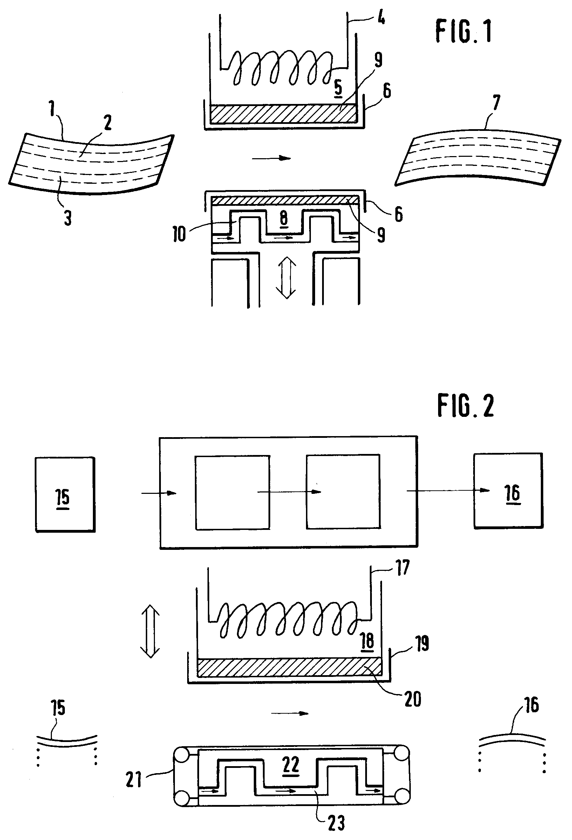

Fig. 1 zeigt den prinzipiellen Ablauf der Nachbehandlung eines Laminat-Bogens aus thermoplastischem Kunststoff mit Zusatzschichten in einer Nachbehandlungsvorrichtung. In diesem einfachen Ausführungsbeispiel zur Erläuterung des prinzipiellen Ablaufs besteht die Vorrichtung aus einer unteren gekühlten Platte und einer oberen geheizten Platte.

Aus dem Materialeingang wird ein nach unten gewölbter Bogen 1 vereinzelt und zwischen eine obere, von einer Heizeinrichtung 4 beheizte Heizplatte 5 und eine untere Kühlplatte 8 der Vorrichtung geführt. Die untere Kühlplatte 8 ist mit einer Kühleinrichtung 10 versehen, durch die ein Kühlmittel, wie z. B. Wasser, fließt. Beide Platten bilden in diesem Ausführungsbeispiel eine ebene Berührungsfläche. Der Bogen trägt auf seiner gewölbten unteren Seite eine Magnetspur 2 und einen Unterschrifts-Streifen 3, die beide entlang der Transportrichtung des Bogens verlaufen.

Die gekühlte untere Platte 8 wird nach Art einer Hebebühne mit Druck beaufschlagt und drückt den auf ihr befindlichen Bogen 1 gegen die Heizplatte 5. Hierbei werden die oberen Lagen des Laminats zumindest teilweise plastisch verformbar und strecken sich unter dem Druck der Platten über die unteren gekühlten starren Lagen des Laminats. Es versteht sich, daß der aufzuwendende Druck abhängig von der Temperatur und der dieser Temperatur entsprechenden Plastizität der zu streckenden Lagen ist.

Aus den vorgenannten Erläuterungen soll deutlich werden, daß es zweckmäßig ist, die Bogenoberseite mit der Heizplatte lediglich für einen definierten Zeitraum in Kontakt zu bringen. Hierbei ist ein "Durchheizen" des Bogens entlang seines Querschnitts - was bei Verwendung von planparallelen Platten einem erneuten Laminieren gleichkäme - zu vermeiden.

Nach Abschluß der vorbeschriebenen Streckung der oberen Lagen wird der Andruck der Platten an das Laminat gegebenenfalls solange aufrechterhalten, bis das Laminat wieder erstarrt ist, um Deformationen der nachbehandelten Lagen beim Abkühlungsprozeß zu vermeiden. Anschließend wird die untere gekühlte Platte von der Heizplatte abgerückt. Sie nimmt den auf ihr liegenden nachbehandelten Bogen mit und er verläßt die Vorrichtung mit nach oben zeigender konvexer Seite.

Die in Fig. 2 dargestellte Vorrichtung zur gleichzeitigen Nachbehandlung zweier Bogen arbeitet nach dem vorgenannten Prinzip und weist ein Transportband in Form eines Kaschierbands 21 für eine schnelle Zu- und Abführung der Bogen auf.

Aus dem Materialeingang werden dem Transportband 21 nacheinander zwei vereinzelte Bogen zugeführt. Diese werden von dem Transportband unter eine Heizplatte 18 bewegt. Die von einer Heizeinrichtung 17 beheizte Platte senkt sich auf den auf dem Transportband mit nach unten zeigender Wölbung liegenden Bogen ab und streckt die oberen Laminat-Lagen der Bogen entsprechend. Während des Streckvorgangs sorgt eine unter dem Transportband befindliche Kühlplatte 22 für eine ausreichende Kühlung der unteren Lagen des Laminats. Hierzu weist die Platte 22 eine in dieser befindliche Kühleinrichtung 23 auf, durch die ein Kühlmittel fließt. Nach Abschluß des Streckvorgangs hebt sich die Heizplatte und die Laminate verlassen die Vorrichtung als Bogen 16, deren konvexe Seite nach oben zeigt.

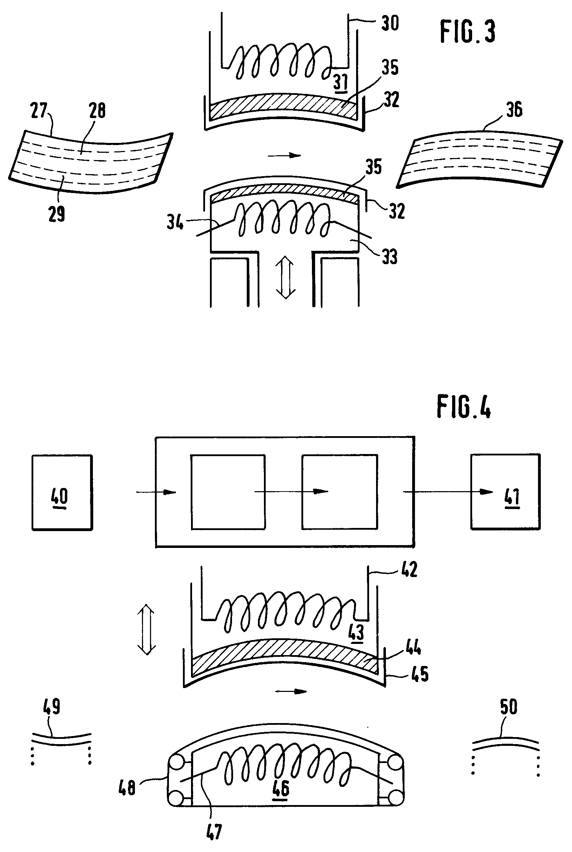

Fig. 3 zeigt eine Nachbehandlungsvorrichtung gemäß Fig. 1, die anstelle von planparallelen Platten gewölbte Platten 31 und 33 aufweist. Die Wölbung der Platten entspricht nahezu der Wölbung, die der zunächst noch umgekehrt gewölbte Bogen 27 nach der Nachbehandlung und dem Abkühlen aufweisen soll. Der zu behandelnde Bogen wird auf die untere entgegengesetzt zum Bogen gewölbte Platte 33 aufgelegt und gegen die obere Platte 31 gepreßt. Da bei diesem Ausführungsbeispiel beide Platten von Heizeinrichtungen 30 bzw. 34 beheizt sind, wird der Bogen vollständig "durchheizt" und durch die gewölbten Platten geformt. Die mit dem vorgenannten Preßvorgang einhergehende Biegespannung ist so zu dimensionieren, daß die zu behandelnde unerwünschte Verformung des Bogens aufgehoben wird. Nachfolgend wird die untere Platte 33 abgerückt und abgekühlt. Der abgekühlte Bogen 36 verläßt die Vorrichtung beispielsweise mit der durch die Platten 31 und 32 bewirkten Wölbung, die insbesondere bei Karten mit einer Magnetspur 28 aufgrund der vorgenannten Problematik beim Lesen durch einen Automaten zweckmäßig sein kann.

Fig. 4 zeigt abschließend eine Vorrichtung gemäß Fig. 2 zur gleichzeitigen Nachbehandlung von zwei Bogen. Die Platten sind bei dieser Ausführungsform ebenfalls gewölbt und die untere Platte ist durch eine Transporteinrichtung in Form eines Kaschierbands 48 gebildet, das um einen Stützkörper 46 umläuft. Bei dieser Ausführungsform werden wie bei Fig. 3 beide Platten 43 und 46 von einer Heizeinrichtung 42 bzw. 47 beheizt. Zwei von einem Stapel vereinzelte Bogen werden von dem Kaschierband 48 unter die obere Platte 43 bewegt, die sich nachfolgend absenkt. Hierdurch werden beide Bogen vollständig "durchheizt" und entsprechend der gewölbten Berührungsflächen wie bereits bei Fig. 3 erläutert - plastisch, das heißt dauerhaft entsprechend der Wölblage der oberen Platte 43 und des unteren Kaschierbands 48 geformt. Nachfolgend hebt sich die obere Platte 43 und gibt die geformten Bogen zum Abtransport aus der Vorrichtung frei.

Um eine oberflächenschonende Nachbehandlung der Laminate beim erfindungsgemäßen Verfahren zu erreichen, sind die mit dem nachzubehandelnden Laminat in Berührung tretenden Platten von einem Kaschierblech bzw. einem Kaschierband 6; 19, 21; 32; 45, 48 umgeben. Um eine möglichst gleichmäßige Druckverteilung bei der Nachbehandlung zu erreichen, ist zwischen dem jeweiligen Kaschierblech und der entsprechenden Platte ein Polster 9; 20; 35; 44 vorgesehen.

**Patentansprüche**

1. Verfahren zur Nachbehandlung eines mehrschichtigen, unter Wärme und Druck hergestellten gewölbten Laminats aus Kunststoff, gegebenenfalls mit Zusatzschichten aus Materialien wie beispielsweise Papier, dadurch **gekennzeichnet,** daß das Laminat (1, 15, 27, 49) zwischen parallelen Platten (5, 8, 18, 22, 31, 43, 46) angeordnet wird und daß zumindest die Seite des Laminats beheizt wird, die beim nachbehandelten Laminat (7, 16, 36, 50) konvex gewölbt ist.

2. Verfahren nach Anspruch 1, dadurch **gekennzeichnet,** daß das Laminat zwischen planparallelen Platten (5, 8, 18, 22) angeordnet wird, und daß die der beheizten Platte (5, 18) gegenüberliegende Platte (8, 22) gekühlt wird.

3. Verfahren nach Anspruch 2, dadurch **gekennzeichnet,** daß die Temperatur der Heizplatte, der auf das Laminat einwirkende Druck und die Dauer der Nachbehandlung derart abgestimmt sind, daß ein Durchheizen des Laminats entlang des Querschnitts vermieden wird.

4. Verfahren nach Anspruch 1, dadurch **gekennzeichnet,** daß das Laminat zwischen gewölbten Platten (31, 33, 43, 46) angeordnet wird, und daß die der beheizten Platte (31, 43) gegenüberliegende Platte (33, 46) ebenfalls beheizt wird.

5. Verfahren nach einem oder mehreren der vorstehenden Ansprüche, dadurch **gekennzeichnet,** daß die Temperatur der beheizten Platte 60 bis 120° C, vorzugsweise 80 bis 100° C, beträgt.

6. Vorrichtung zur Durchführung des Verfahrens nach Anspruch 1, dadurch **gekennzeichnet,** daß zwei planparallele, gegeneinander bewegliche Platten 5, 8, 18, 22) vorgesehen sind, wovon die eine Platte eine Heizeinrichtung (4, 17) und die andere eine Kühleinrichtung (10, 23) aufweist.

7. Vorrichtung zur Durchführung des Verfahrens nach Anspruch 1, dadurch **gekennzeichnet,** daß zwei gewölbte, gegeneinander bewegliche Platten (31, 33, 43, 46) vorgesehen sind, und daß beide Platten eine Heizeinrichtung (30, 34, 42, 47) aufweisen.

8. Vorrichtung nach einem oder mehreren der vorstehenden Vorrichtungsansprüche, dadurch **gekennzeichnet,** daß die beheizte Platte oder beide beheizte Platten mit einem Polster (9, 20, 35, 44) zur gleichmäßigen Druckverteilung bei Einwirkung auf das nachzubehandelnde Laminat versehen sind.

9. Vorrichtung nach einem oder mehreren der vorstehenden Vorrichtungsansprüche, dadurch **gekennzeichnet,** daß die Platten von einem Kaschierblech (6, 19, 32, 45) umkleidet sind.

10. Vorrichtung nach einem oder mehreren der vorstehenden Vorrichtungsansprüche, dadurch **gekennzeichnet,** daß mindestens eine der Platten als Transportband (21, 48) ausgebildet ist.

# FIG.1

# FIG.2

FIG.3

FIG.4